# DEMANDE DE BREVET EUROPEEN

(11) **EP 1 852 640 A1**
(43) Date de publication de la demande: **07.11.2007**
(21) Numéro de dépôt: 06113528.1
(22) Date de dépôt: 04.05.2006
(51) Int. Cl.: F16K 1/30, F17C 13/04

(54) **Robinet**

(71) Demandeur: LUXEMBOURG PATENT COMPANY S.A., 7440 Lintgen (LU)
(72) Inventeur: Muzzo, Paul, 57970, Yutz (FR); Kremer, Paul, 7263 Helmsange (LU)
(74) Mandataire: Ocvirk, Philippe

(57) **Abrégé**

Robinet pour bouteille de gaz pressurisé ou liquéfié comprenant un corps de robinet (12) avec un passage d'écoulement de gaz (16) s'étendant entre un orifice d'entrée (18) et un orifice de sortie (20) ; et un siège d'étanchéité (30) dans le passage (16) de corps de robinet auquel est associé un organe d'obturation (34). Une tête de commande (14, 114) est montée de manière amovible sur le corps de robinet (12) et comprend une tige de commande axiale (60, 118) coopérant avec l'organe d'obturation (34) pour le déplacer entre une position de fermeture dans laquelle il repose sur le siège d'étanchéité (30) pour bloquer l'écoulement dans le passage (16) et une position d'ouverture dans laquelle l'organe d'obturation (34) est écarté du siège d'étanchéité (30) pour permettre l'écoulement. Un moyen de verrouillage (82) est intégré au corps de robinet (12) et permet le blocage de l'organe d'obturation (34) sur le siège d'étanchéité (30) lorsque la tête de commande (14, 114) est séparée du corps de robinet (12).

## Description

### Domaine technique

La présente invention concerne un robinet, notamment pour bouteille (ou cylindre) de gaz ou gaz liquéfié. Ce robinet est particulièrement bien adapté pour les applications utilisant des gaz ultra purs.

### Etat de la technique

L'utilisation de plus en plus répandue de gaz spéciaux et le niveau de pureté élevé demandé aujourd'hui par certaines industries se traduit par un effort permanent des fabricants de robinets, vannes et autres équipements de distribution de gaz afin d'améliorer la qualité et l'intégrité de leurs produits.

Pour l'industrie des semiconducteurs par exemple, on a développé des systèmes de distribution de gaz de haute qualité car la présence d'impuretés dans les gaz pourrait affecter de manière irrémédiable les propriétés électriques des composants et donc affecter également le rendement de production. En outre, ces gaz sont couteux, très réactifs, corrosifs et/ou toxiques et il est donc impératif d'avoir des équipements adaptés et fiables.

Si le nombre d'utilisateurs de gaz spéciaux peut être relativement important, les sites de fabrication de tels gaz sont peu nombreux et peuvent être très éloignés des utilisateurs. Dans la pratique, cela ajoute des coûts logistiques importants aux coûts liés au gaz eux-mêmes et aux équipements spéciaux (notamment bouteille et robinets).

Aujourd'hui, les bouteilles de gaz spéciaux sont équipées, en sortie d'usine, soit de robinets à commande manuelle, soit de robinets à commande pneumatique, suivant les besoins des clients/utilisateurs. Il arrive souvent qu'une même usine, par exemple de production de semiconducteurs, utilise simultanément des bouteilles équipées de commandes manuelles et pneumatiques. Une situation à laquelle est fréquemment confrontée l'utilisateur est que le gaz qu'il souhaite utiliser est contenu dans une bouteilles équipée d'un robinet à commande manuelle, alors que l'installation dans laquelle il aurait voulu l'utiliser requiert une commande pneumatique, ou inversement. En outre, certaines bouteilles équipées d'un type de commande sont réexpédiées encore partiellement remplies vers le site de production de gaz (ou le distributeur) car elles ne peuvent pas être utilisées avec une autre application qui requiert un autre type de commande du robinet. Enfin, un producteur ou distributeur de gaz est confronté au même problème, car il doit étendre son parc de bouteilles de gaz haute pureté afin de disposer en permanence d'un stock de bouteilles équipées de robinets à commande manuelle et commande pneumatique, pour pouvoir satisfaire les besoins de sa clientèle.

### Description générale de l'invention

Afin de remédier aux problèmes mentionnés ci-dessus, la présente invention propose un robinet, notamment pour bouteille de gaz sous pression ou liquéfié, comprenant un corps de robinet avec un passage d'écoulement de gaz s'étendant entre un orifice d'entrée et un orifice de sortie. Un siège d'étanchéité est agencé dans le passage de corps de robinet, auquel est associé un organe d'obturation. Une tête de commande est montée sur le corps de robinet et comprend une tige de commande axiale coopérant avec l'organe d'obturation pour le déplacer entre une position de fermeture dans laquelle il repose sur le siège d'étanchéité pour bloquer l'écoulement dans le passage et une position d'ouverture dans laquelle l'organe d'obturation est écarté du siège d'étanchéité pour permettre l'écoulement du gaz dans le passage.

Selon un aspect important de l'invention, la tête de commande est montée de manière amovible sur le corps de robinet. En outre, un moyen de verrouillage est intégré au corps de robinet, ce moyen de verrouillage permettant le blocage de l'organe d'obturation sur le siège d'étanchéité lorsque la tête de commande est séparée du corps de robinet, et ce lorsque qu'il y a un gaz sous pression dans la bouteille sur laquelle le robinet est monté.

La présente invention concerne donc un robinet dont la tête de commande est détachable du corps de robinet, ce qui permet de changer de tête de commande et notamment de remplacer une tête de commande manuelle par une tête de commande pneumatique, ou basée sur un autre principe d'actionnement. La présence du moyen de verrouillage intégré au corps de robinet est particulièrement appréciable puisqu'il permet de bloquer l'organe de commande sur le siège d'étanchéité lorsque la tête de commande est séparée du corps de robinet, ce qui rend possible le changement de tête de commande lorsque la bouteille (ou le système sur lequel le corps est monté) est sous pression.

Le robinet selon l'invention permet donc une plus grande flexibilité de gestion de stocks ou parcs de bouteilles, et ce pour les fabricants ou distributeurs de gaz aussi bien que pour les utilisateurs. Un gazier peut en un laps de temps très court effectuer le changement de tête de commande, bouteille sous pression, sans risque d'échappement de gaz.

Différentes réalisations sont envisageables pour le moyen de verrouillage selon la conception du corps de robinet. Certaines caractéristiques préférées d'un tel moyen de verrouillage sont citées ci-dessous.

Le moyen de verrouillage est de préférence conçu pour n'avoir d'incidence sur le fonctionnement du robinet que dans une position dite "active", dans laquelle l'organe d'obturation est bloqué sur le siège d'étanchéité. Lorsque le verrouillage n'est pas souhaité, le moyen de verrouillage peut être mis en position de repos, dans laquelle il n'agit pas sur l'organe d'obturation.

Selon une variante, le moyen de verrouillage comprend une butée déplaçable axialement, hors du passage d'écoulement de gaz, entre une position active et une position de repos. Cette butée peut prendre la forme d'un manchon qui comprend sur sa surface latérale extérieure un filet coopérant avec un filet sur une partie fixe du corps de robinet, de sorte que lorsqu'on fait tourner le manchon sur le filet, il se rapproche ou s'éloigne de l'organe d'obturation.

Pour des raisons de sécurité, le moyen de verrouillage est avantageusement conçu de sorte que la tête de commande ne peut être démontée que lorsque le moyen de verrouillage est en position active, organe d'obturation en position de fermeture. On peut par exemple utiliser des vis de fixation (ou d'autres moyens de fixation amovibles) pour fixer la tête de commande au robinet, lesquelles vis sont cachées lorsque le mécanisme de verrouillage est en position active et sont accessibles pour le démontage dans la position de repos.

Pour des raisons de sécurité également, un couplage rigide séparable est avantageusement prévu entre la tige de commande et l'organe d'obturation. On obtient donc un robinet avec un clapet dit "attelé" : c'est-à-dire qu'un déplacement de la tige de commande entraine nécessairement un déplacement de l'organe d'obturation.

Dans une variante préférée, l'organe d'obturation comprend un clapet fixé à l'extrémité d'une tige de clapet guidée axialement par rapport au siège d'étanchéité dans un alésage longitudinal du corps de robinet. Dans ce cas, la butée entoure de préférence la tige de clapet et peut être déplacée axialement dans la position active dans laquelle elle agit directement sur la tige ou le clapet.

Pour l'attelage du clapet, la tige de clapet comprend avantageusement à son extrémité opposée au clapet un filet extérieur qui coopère avec un filet dans un logement cylindrique de la tige de commande. Un tel accouplement permet, lorsque la tige de commande se déplace axialement, de transmettre le mouvement axial à la tige de clapet. En outre, si la tige de commande est pivotée sur elle même et que la tige de clapet est bloquée en rotation, ce type de couplage permet de générer un déplacement axial de la tige de clapet.

Pour son actionnement, le mécanisme de verrouillage comprend de préférence un volant entourant le corps de robinet, du côté de la tige de clapet et de la tête de commande. Le volant est couplé à la butée axiale de telle sorte qu'une rotation du volant (typiquement sur une portion de tour) autour du corps de robinet engendre un déplacement axial de la butée. Selon une variante, le volant est fixé par des vis sur une couronne cannelée qui s'engage dans des cannelures sur la périphérie extérieure du manchon formant butée. Le volant est solidaire de la couronne cannelée par l'intermédiaire de vis qui traversent le corps de robinet au niveau de fentes de guidages (généralement dans un plan perpendiculaire à l'axe de la tige de commande) qui définissent la course dudit volant autour du corps de robinet.

Le volant peut comprendre une série d'ouvertures qui sont positionnées de sorte à être alignées (coïncider) avec des moyens de fixation de la tête de commande au corps de robinet, pour le démontage de la tête, et de sorte à cacher ces moyens de fixation dans la position de repos du moyen de verrouillage.

Selon une exécution, le corps de robinet comprend une pièce formant connecteur accueillant la tête de commande. Le volant entoure la pièce formant connecteur ; la couronne cannelée est placée dans la pièce formant connecteur et les fentes de guidage sont prévues dans la pièce formant connecteur. La tête de commande est fixée de manière amovible à cette pièce formant connecteur, laquelle peut être réalisée intégralement avec le corps de robinet ou être fixée à celui-ci, par exemple par vissage.

La tête de commande peut être du type à actionnement manuel ou à distance, par exemple pneumatique. En effet, on peut envisager pour la tête d'actionnement tout type de mécanisme permettant le déplacer axialement la tige de commande.

Lorsqu'on utilise une tête de commande du type pneumatique avec ressorts de précontrainte, cette dernière comprend avantageusement un mécanisme de verrouillage pour bloquer les ressorts de précontrainte dans une position comprimée. Cela évite que les ressorts ne se déploient au maximum lorsque la tête d'actionnement est séparée du corps de robinet.

Comme on l'aura compris, le robinet selon l'invention trouve une application particulièrement avantageuse en tant que robinet de bouteille de gaz pressurisé ultra-haute pureté. Le corps de robinet est alors conçu pour être fixé sur une bouteille et l'orifice d'entrée du canal de passage débouche typiquement à l'intérieur de la bouteille. Néanmoins, le présent robinet peut aussi être utilisé comme vanne de passage dans un système de distribution de gaz (fluide). Dans ce cas, on adaptera de préférence le corps de robinet de sorte à ce que les orifice d'entrée et de sortie soient raccordables aux conduites ou autres éléments du système de distribution de gaz.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent :
Fig. 1: une vue en coupe longitudinale d'un mode de réalisation préféré d'un robinet selon l'invention, avec une tête de commande manuelle ;
Fig. 2: une vue éclatée du moyen de verrouillage intégré à la partie de connecteur du corps de robinet ;
Fig. 3: une vue en coupe longitudinale du corps de robinet de la Fig.1, équipé d'une tête de commande pneumatique ;
Fig. 4: une vue en perspective du corps de robinet sans tête de commande;
Fig. 5 et 6: une vue en perspective du robinet de la Fig.1, respectivement de la Fig.3.

### Description d'une exécution préférée

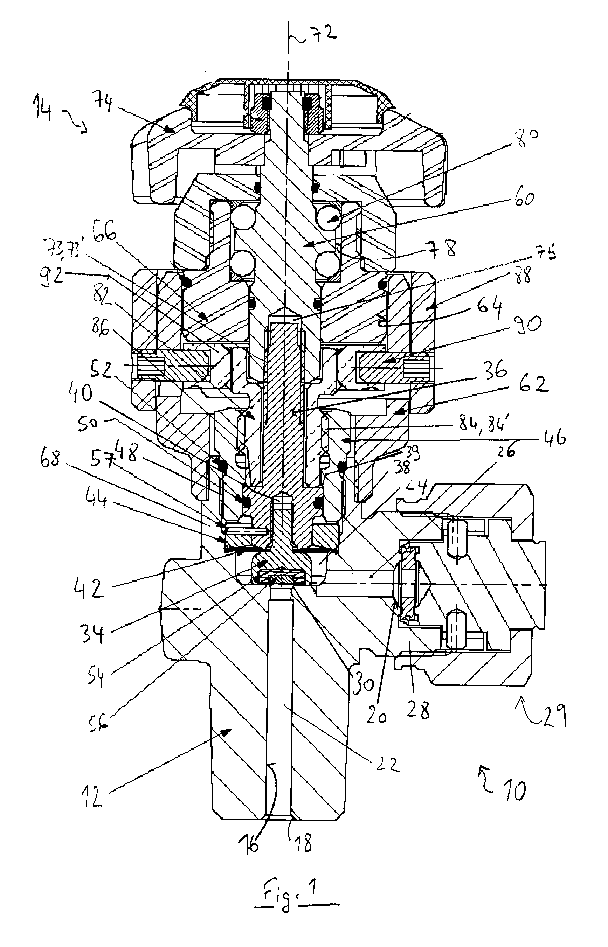

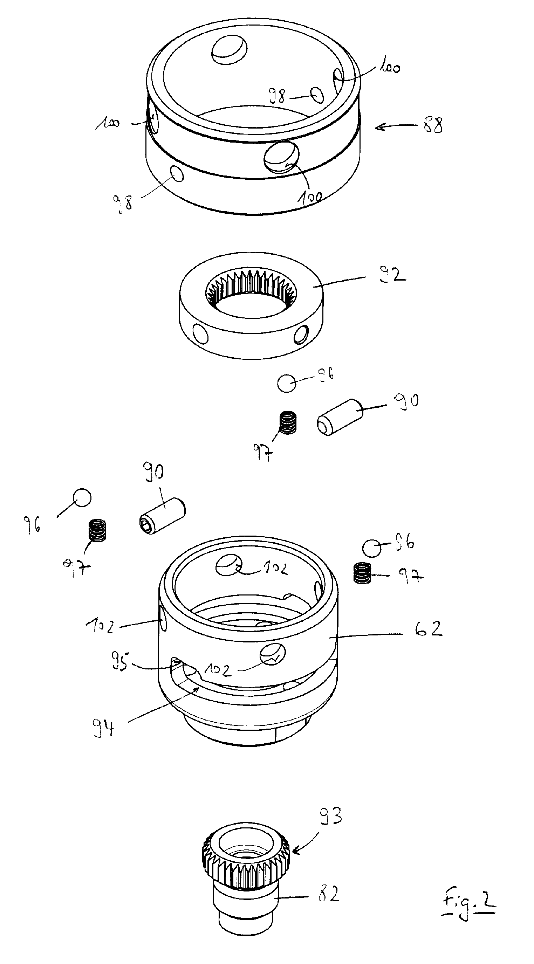

La Fig.1 illustre une vue en coupe longitudinale d'un mode de réalisation préféré du présent robinet 10, qui comprend un corps de robinet et une tête de commande désignés de manière générale 12 et 14 respectivement. Dans la variante de la Fig.1, la tête de commande 14 est du type à actionnement manuel alors que dans celle de la Fig.3, la tête, indiquée 114, est du type pneumatique. Comme cela sera expliqué plus en détails ci-dessous, la tête de commande 14, 114 est montée de manière amovible et peut être séparée du corps de robinet 12 alors que ce dernier est fixé sur une bouteille sous pression. Cela permet donc d'interchanger une tête de commande avec une autre, dont le principe d'actionnement peut être différent. Le remplacement de la tête de commande 14, 114 alors que la bouteille est sous pression est rendu possible notamment par la présence d'un mécanisme de verrouillage dans le corps de robinet apte à agir sélectivement sur l'organe d'obturation pour le bloquer en position de fermeture.

Le corps de robinet 12 est conçu pour être vissé sur une bouteille de gaz (non montrée) et comprend un passage d'écoulement de gaz 16 qui s'étend entre un orifice d'entrée de gaz 18 et un orifice de sortie de gaz 20. Dans la présente exécution, le passage d'écoulement 16 est formé par un passage d'entrée 22 reliant l'orifice d'entrée 18 à une chambre de robinet 24 et un passage de sortie 26 reliant la chambre de robinet 24 à l'orifice de sortie 20. Le passage d'entrée 22 traverse la partie inférieure du corps 12, laquelle est munie d'un filet (non représenté) permettant au robinet d'être vissé sur la bouteille. Le passage de sortie 26 quant à lui débouche à l'extrémité d'une portion formant raccord 28 équipé d'un raccord amovible 29.

L'extrémité du passage d'entrée 22 débouchant dans la chambre 24 forme un siège d'étanchéité 30 avec lequel coopère un organe d'obturation pour permettre l'écoulement vers le passage de sortie 26 ou obturer le passage 16 de manière étanche. L'organe d'obturation comprend un clapet 34 qui est de préférence solidaire d'une tige de clapet 36 qui traverse un alésage longitudinal 38 en partie supérieure 68 du corps de robinet 12. Par déplacement axial de la tige de clapet 36, le clapet 34 peut donc être déplacé entre une position de fermeture (Fig.1) dans laquelle il repose sur le siège d'étanchéité et ferme de manière étanche le passage 16, et une position d'ouverture écartée du siège 30 dans la chambre 24, dans laquelle le gaz peut s'écouler en direction du passage de sortie 26. Pour sa fixation à la tige de clapet 36, le clapet 34 comprend une portion de tige filetée qui est vissée sur un filet de la surface intérieure d'un logement 40 à l'extrémité de la tige de clapet 36.

L'étanchéité de la chambre 24 vers l'extérieur, c'est-à-dire du côté de la tige de clapet 36 et au niveau de l'alésage longitudinal 38 est réalisée de manière conventionnelle par une membrane flexible 42 (plastique ou métallique). Comme on le voit sur la Fig.1, cette membrane 42 entoure la tige de clapet 36 et ferme la chambre 24 du côté de l'alésage 38 où elle est maintenue par une monture 44, elle même maintenue par une étoupe 46 solidement fixée par vissage (filets repérés 48) dans l'alésage 38. On notera aussi que l'étoupe 46 comprend de préférence d'un épaulement 39 limitant le déplacement axial de la tige de clapet 34 dans le sens d'ouverture. Les références 50 et 52 indiquent deux joints toriques. De manière classique également, le clapet 34 peut comprendre, face au siège 30, une cavité dans laquelle sont agencés une pastille 54 et un bouchon 56. Enfin, la tige de clapet 36 est bloquée en rotation par une goupille 57 guidée axialement dans la monture 44.

La tête de commande 14 est montée, amovible, sur le corps de robinet 12 et comprend une tige de commande 60 pour l'actionnement de la tige de clapet 36 et donc du clapet 34. Dans la présente variante, la tête de commande 14 est accueillie dans un corps intermédiaire 62, encore appelé connecteur, du corps de robinet 12. Le connecteur 62 a une forme généralement tubulaire et définit un logement cylindrique 64 dans lequel est reçu la partie inférieure du corps 66 de la tête de commande 12. Le connecteur 64 est ici conçu comme pièce indépendante et est vissé par sa partie inférieure sur la portion supérieure 68. Dans la configuration assemblée de la Fig.1, la tête de commande 14 est fixée au connecteur 62 par l'intermédiaire de vis (non représentées) dont la tête est logée dans le connecteur 62 et la tige filetée pénètre dans le corps 66 de la tête de commande 14.

On appréciera en outre que la tige de commande 60 est rigidement couplée à la tige de clapet 36, de sorte qu'un mouvement axial (selon axe 72) de la commande 60 entraine nécessairement un déplacement du clapet 34. Pour cela, l'extrémité de la tige 36 opposée au clapet est munie d'un filet extérieur 73 et vient se visser sur un filet intérieur 73' dans un logement cylindrique 75 dans la tige de commande 60.

Dans la présente variante, la conception de la tête de commande 14 est telle que la tige de commande 60 est bloquée axialement et peut donc uniquement tourner autour de l'axe 72 lorsqu'on actionne le volant 74 duquel elle est solidaire par son extrémité supérieure. Le bocage dans le sens axial est obtenu par une excroissance radiale 76 de la tige 60 au niveau d'une cavité 78, dans laquelle l'excroissance 76 est bloquée entre des billes 80, permettant donc uniquement la rotation de la tige 60 sur elle-même.

La tige de commande 60 étant bloquée axialement, on comprendra que la manoeuvre du volant 74 entraine une rotation de la tige 60 et de son filet 73', qui provoque par conséquent le déplacement axial de la tige de clapet 36 (bloquée en rotation).

Comme indiqué ci-dessus, un moyen de verrouillage du clapet 34 est intégré au corps de robinet 12. Dans la présente variante, il comprend un manchon 82 déplaçable axialement, lequel constitue une butée escamotable. Plus précisément, le manchon 82 s'étend dans l'alésage 38 et dans le raccord 62. Le manchon 82 comprend un filet extérieur 84 qui coopère avec un filet intérieur 84' de l'étoupe 46, la rotation du manchon 82 provoquant par conséquent un déplacement axial de celui-ci vers le haut ou le bas, selon le sens de rotation. Dans la Fig.1, le clapet 34 est en position de fermeture sur sont siège 30 et le manchon 82 est en butée contre un épaulement 86 de la tige de clapet 36, empêchant ainsi tout déplacement de la tige 36 et empêchant donc l'écartement du clapet 34 de son siège 30. Dans cette configuration, le moyen de verrouillage est dit en position active.

Dans cette position active, le déplacement axial de la tige de clapet 36 et du clapet 34 sont empêchés par le manchon 82, lequel rend également inactif la tête de commande. On comprendra donc que, dans la position active du moyen de verrouillage, la tête de commande 14 peut être démontée sans que cela n'ait d'incidence sur la fermeture de la bouteille, et donc sans risque de fuites de gaz.

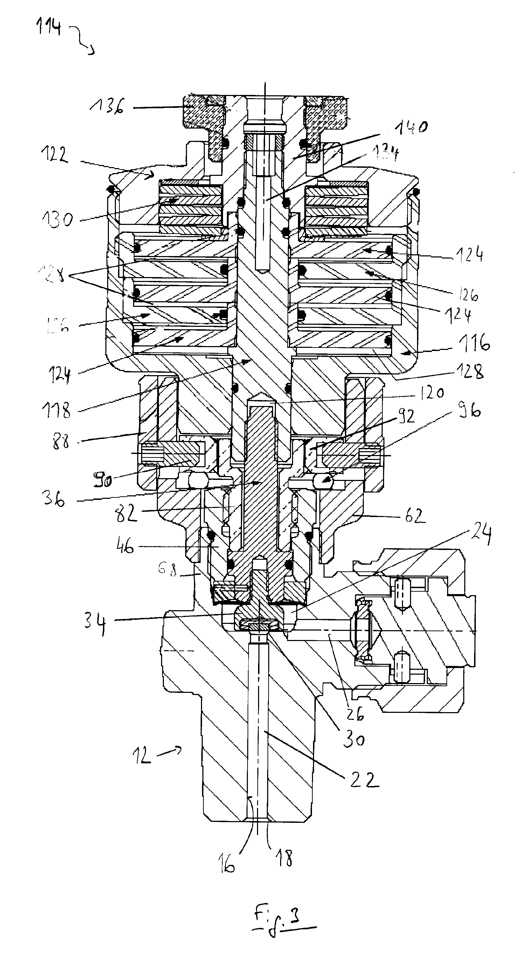

Pour manoeuvrer (positionnement axial) le manchon 82, le moyen de verrouillage comprend avantageusement un volant 88 à la périphérie du connecteur 62 qui est fixé par des vis 90 à une couronne cannelée 92, laquelle est engagée avec des cannelures extérieures 93 prévues en partie supérieure du manchon 82. Comme on le comprendra mieux en Fig.2, les vis de fixation 90 sont au nombre de deux et sont diamétralement opposées. Chaque vis 90 a sa tête logée dans le volant, traverse le connecteur 62 et vient se visser dans la couronne cannelée 92. On notera que le connecteur 62 comprend deux fentes de guidage 94 s'étendant dans un plan essentiellement perpendiculaire à l'axe 72. En faisant tourner le volant 88 par rapport au corps de robinet 12, on entraine donc la couronne cannelée 92, qui provoque la rotation du manchon 82 et donc son déplacement axial sur l'étoupe 46. L'amplitude du déplacement axial du manchon 82 dépend du pas des filets 84, 84' et de la course angulaire du volant 88 (ici de l'ordre de 120°). Les cannelures sont intéressantes en ce qu'elles permettent un entrainement en rotation du manchon 82 tout en autorisant son déplacement axial.

Chaque fente de guidage 94 peut définir à l'une de ses extrémités, ou aux deux, un dégagement 95 permettant le blocage du volant dans les position active et/ou de repos (dans laquelle le manchon est en retrait sur le filet 84' et ne s'oppose pas au mouvements de l'organe d'obturation). Les signes de référence 96 et 97 indiquent respectivement des billes et ressorts qui sont positionnées sous la couronne cannelée 92 et prennent appui sur le fond du connecteur 62 pour faciliter la rotation de la couronne 92 et générer une force de rappel vers le haut servant au blocage dans les dégagements 95.

En se référant encore à la Fig.2, on notera que le volant 88 comprend deux séries de trous 98 et 100. Les trous 98 sont au nombre de deux, diamétralement opposés, et accueillent les têtes des vis 90 pour la fixation à la couronne cannelée 92. Les trous 100, en partie supérieure du volant, sont au nombre de quatre et sont prévus pour accéder aux vis ou goupilles de fixation (non représentées) de la tête de commande. Dans la présente variante, ces vis de fixation ont leur tête logée dans des trous 102 du connecteur 62 et leur tige vissée dans la base du corps 66 de la tête de commande 14.

On appréciera que les trous 100 dans le volant et les trous 102 dans le connecteur 62 sont disposés de sorte à ce qu'ils coïncident uniquement lorsque la position angulaire du volant 88 est celle qui correspond à la position active du moyen de verrouillage, les trous 102 étant donc cachés par le volant 88 dans les autres positions. Il n'est donc pas possible de démonter (et donc monter) la tête de commande 14 si le moyen de verrouillage n'est pas actif, critère de sécurité appréciable pour les utilisateurs.

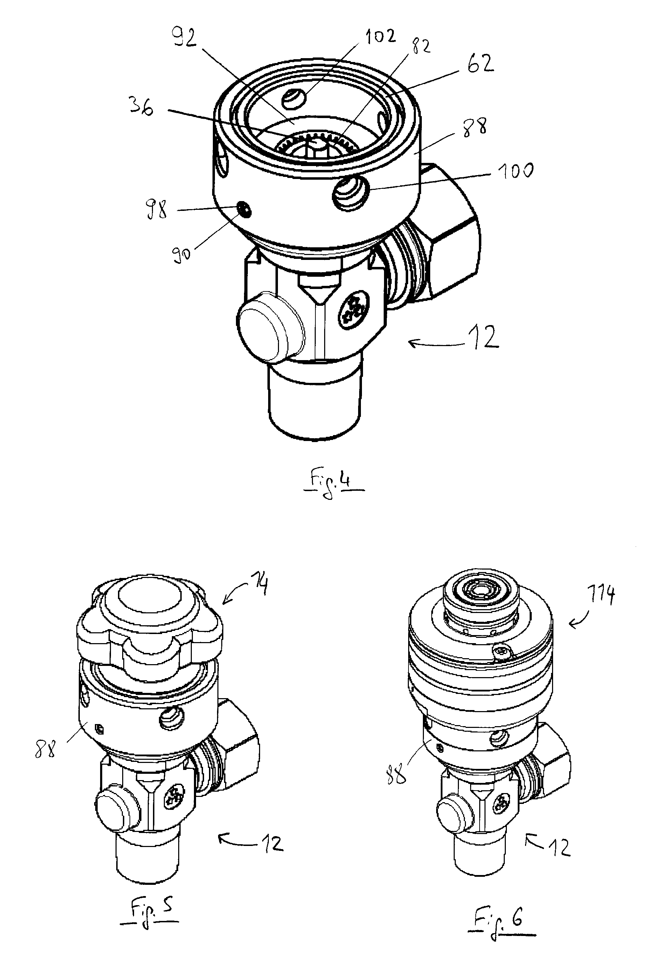

Lorsque le présent robinet 10 est monté sur une bouteille de gaz sous pression, le démontage de la tête de commande 14 se fait normalement de la manière suivante. Le clapet 34 est mis en position de fermeture sur son siège 30 par actionnement du volant 74. Ensuite, le volant de verrouillage 88 est tourné dans la position active, de sorte à mettre le manchon 82 en butée contre l'épaulement 86 de la tige de clapet 36. Dans cette position du volant de verrouillage 88, les trous 100 et 102 coïncident, permettant l'accès aux vis de fixation de la tête de commande 14 comme illustré sur la Fig.5. Les vis de fixation peuvent donc être dévissées et retirées, désolidarisant ainsi le corps 66 de la tête de commande 14 du connecteur 62. Pour retirer la tête de commande 14, il suffit alors de la faire tourner sur elle même, afin de désaccoupler la tige de commande 60 de la tige de clapet 36. La Fig.4 illustre une vue en perspective du corps de robinet 12 sans tête de commande, avec le volant 88 dans la position d'activation du verrouillage du clapet 34.

Une fois la tête de commande manuelle 14 détachée, on peut bien entendu la refixer sur le corps de robinet 12, y fixer une autre tête manuelle, ou bien encore une tête de commande à distance, par exemple du type pneumatique. On comprendra que le principe d'actionnement de la tête de commande ne joue pas en soi, les critères pour le montage de la tête de commande étant simplement que la géométrie de la base de la tête s'adapte dans le connecteur 62 pour y être fixée par les vis de fixation à travers les trous 100 et 102, et que la tige de commande puisse s'accoupler à la tige de clapet 34.

Un exemple de tête de commande 114 à actionnement pneumatique monté sur le corps de robinet 12 est illustré sur la Fig.3, la Fig.6 montrant une vue en perspective. La tête de commande 114 comprend, comme pour la tête manuelle 14, un corps 116 qui vient se loger dans le connecteur 62 et une tige de commande axiale 118 apte à s'accoupler à la tige de clapet 36. Pour ce faire, l'extrémité inférieure de la tige de commande 118 comprend un logement cylindrique 120 muni d'un filet sur lequel vient se visser le filet de l'extrémité supérieure de la tige de clapet 36. Le clapet 34 est ainsi attelé et suit donc nécessairement les déplacements de la tige de commande 118.

Le montage d'une telle tête de commande 114 se fait en positionnant la tête de sorte à engager l'extrémité supérieure de la tige de clapet 36 dans le logement 120 puis en vissant ces derniers pour les accoupler, par rotation de la tête sur elle même. En même temps que la tige de clapet 36 pénètre dans le logement 120, le corps 116 de la tête de commande 114 pénètre dans le connecteur 62. On arrête la rotation de la tête 114 lorsque les trous pour les vis de fixation dans le corps 116 sont alignés avec les trous 102 du connecteur 62, puis on immobilise la tête 114 en vissant les vis de fixation dans le corps 116. On raccorde ensuite la tête de commande 114 à un tuyau de commande pneumatique (non représenté) et l'on tourne le volant 88 pour le mettre le manchon 82 en position de repos, libérant ainsi le clapet 34.

Le principe d'actionnement de la tête de commande 114 est conventionnel. La tige de commande 118 peut se déplacer axialement dans le corps 116, et commande ainsi la position du clapet 34 par rapport à son siège 30. Un couvercle 122 est vissé sur le corps 116. Trois assemblages de pistons sont empilés dans le corps 116. Chaque assemblage de piston comprend un piston 124 pouvant coulisser axialement dans le corps 116 et une cloison fixe 126 l'espace entre chaque piston 124 et cloison 126 respectifs formant une chambre de pression 128. Les pistons 124 sont espacés le long de la tige de commande 118 et solidaires de celle-ci. Des moyens de ressort 130 prenant la forme d'un empilement de rondelles Belleville, sont disposés dans un logement 132 dans le couvercle et s'appuient sur ce dernier ainsi que sur le premier piston 124, créant une précontrainte. Les pistons 124 étant solidaires de la tige de commande 118, la force exercée par les rondelles Belleville 130 est transmise à la tige de commande 118, ce qui tend à pousser la tige de clapet 36 et donc le clapet 34 vers le bas sur son siège 30, formant ainsi un robinet dit "normalement fermé". Des chemins d'amenée de fluide sont agencés dans la tige de commande 118 pour introduire un fluide sous pression, typiquement de l'air comprimé, dans les chambres de pression 128 (le canal de fluide central 134 étant seulement montré en Fig.3). Le robinet 10 peut être ouvert en injectant de l'air comprimé dans les chambres de pression 128 de sorte à exercer sur les pistons 124 une force supérieure à la force élastique des rondelles Belleville, causant ainsi le déplacement de la tige de commande 118 vers le haut. En raison du couplage dans le logement 120, la tige de clapet 36 suit le mouvement de la tige de commande 118 et écarte le clapet 34 de son siège 30, permettant l'écoulement de gaz dans le passage 22. On notera que le couplage sert ici simplement à transmettre une force axiale car il n'y a pas de rotation de la tige de commande 118, contrairement au cas de la tête de commande manuelle de la Fig.1.

Afin d'éviter un déplacement vers le bas de la tige de commande 118 sous l'action des rondelles Belleville 130 lorsque la tête de commande 114 n'est pas montée sur le corps de robinet 12, la tête de commande 114 comprend avantageusement un système de verrouillage des rondelles Belleville. Dans la variante de la Fig.3, ce système comprend un contre-écrou 136 placé sur un filet extérieur d'un raccord pneumatique 140 vissé sur la tige de commande 118. Le raccord 140 communique avec le canal central 134 dans la tige de commande 118.

Typiquement, les rondelles Belleville 130 seront pré-comprimées en usine, lors de l'assemblage de la tête de commande 114. Pour ce faire, on met la tête de commande 114 sous pression, ce qui provoque le déplacement de la tige 118 vers le haut. L'opérateur peut ensuite tourner manuellement le contre-écrou 136 sur le filet du raccord 140 de sorte à faire descendre le contre-écrou 136 et l'amener en butée contre le couvercle 122. Lorsque la pression est relâchée, la tige 118 reste bloquée en position haute et les rondelles Belleville 130 comprimées.

Pour libérer les rondelles Belleville 130 comprimées par le contre-écrou 136 lors de la première utilisation, lorsque la tête a été montée sur le corps de robinet 12, on met la pression dans la tête et on dévisse le contre-écrou 136 pour le ramener dans la position de la Fig.3. Pour les démontages et remontages suivants de la tête, on procèdera de la même façon, c'est à dire que le contre-écrou 136 est manipulé lorsque la tête 114 est sous pression (limitant ainsi les frottements).

Dans la variante préférée illustrée sur les Figures, le siège est du type normal (ou direct), c'est à dire que la pression dans la bouteille tend à écarter le clapet de son siège. Pour le verrouillage du clapet 34, le manchon 82 est déplacé vers le siège 30 de sorte à exercer une force de pression en direction du siège d'étanchéité 30 en s'appuyant sur l'épaulement 86.

Un tel moyen de verrouillage est tout à fait transposable dans le cas d'un corps de vanne à siège inversé, dont la pression dans la bouteille tend à repousser le clapet sur le siège d'étanchéité et donc fermer le passage. Dans ce cas, l'activation du verrouillage correspondrait par exemple, à éloigner le manchon axialement du siège d'étanchéité de sorte à s'appuyer sur un épaulement de la tige de clapet et exercer une force dans le sens de sortie des gaz, évitant donc que l'organe d'obturation ne puisse être activé dans le sens d'ouverture.

Enfin, le corps de robinet pourrait comprendre une membrane au lieu du clapet 34. Dans ce cas, la fermeture du siège d'étanchéité implique néanmoins l'application d'un organe d'obturation (souvent non-attelé à la tige de commande) sur la membrane de sorte à la plaquer sur le siège d'étanchéité. On peut donc utiliser un moyen de verrouillage du type de celui décrit ci-dessus dans le cas du siège direct, le moyen de verrouillage coopérant avec l'organe d'obturation.

## Revendications

1. Robinet, notamment pour bouteille de gaz pressurisé ou liquéfié, comprenant :
un corps de robinet comprenant un passage d'écoulement de gaz s'étendant entre un orifice d'entrée et un orifice de sortie ;
un siège d'étanchéité dans ledit passage de corps de robinet auquel est associé un organe d'obturation ;
une tête de commande montée sur ledit corps de robinet et comprenant une tige de commande axiale coopérant avec ledit organe d'obturation pour le déplacer entre une position de fermeture dans laquelle il repose sur ledit siège d'étanchéité pour bloquer l'écoulement dans ledit passage et une position d'ouverture dans laquelle l'organe d'obturation est écarté dudit siège d'étanchéité pour permettre l'écoulement ;
**caractérisé en ce que**
ladite tête de commande est montée de manière amovible sur ledit corps de robinet ; et
un moyen de verrouillage est intégré audit corps de robinet et permet le blocage de l'organe d'obturation sur ledit siège d'étanchéité lorsque ladite tête de commande est séparée dudit corps de robinet.

2. Robinet selon la revendication 1, **caractérisé en ce que** le moyen de verrouillage peut être manoeuvré entre une position active dans laquelle l'organe d'obturation est bloqué sur ledit siège d'étanchéité et une position de repos dans laquelle l'organe d'obturation peut être écarté dudit siège d'étanchéité.

3. Robinet selon la revendication 2, **caractérisé en ce que** ledit moyen de verrouillage est conçu de telle sorte que la tête de commande ne peut être démontée que lorsque le moyen de verrouillage est en position active.

4. Robinet selon l'une quelconque des revendications précédentes, **caractérisé par** un couplage rigide séparable entre ladite tige de commande et ledit organe d'obturation.

5. Robinet selon l'une quelconque des revendications précédentes, **caractérisé en ce que** :
l'organe d'obturation comprend un clapet fixé à l'extrémité d'une tige de clapet guidée axialement par rapport au siège d'étanchéité dans un alésage longitudinal; et
ladite tige de clapet comprend à son extrémité opposée audit clapet un filet extérieur qui coopère avec un filet dans un logement cylindrique de la tige de commande.

6. Robinet selon l'une quelconque des revendications précédentes, **caractérisé en ce que** ledit moyen de verrouillage comprend une butée mobile axialement hors du passage d'écoulement de gaz.

7. Robinet selon la revendication 6, **caractérisé en ce que** ladite butée est en forme de manchon coaxial à la direction d'actionnement et comprend sur sa surface latérale extérieure un filet coopérant avec un filet sur une partie fixe dudit corps de robinet.

8. Robinet selon la revendication 6 ou 7, **caractérisé en ce que** ledit moyen de verrouillage comprend un volant entourant le corps de robinet du côté de la tête de commande et couplé à ladite butée, de sorte que la rotation dudit volant entraine le déplacement axial de ladite butée.

9. Robinet selon la revendication 8, **caractérisé en ce que** ledit volant est solidaire d'une couronne cannelée dans le corps de robinet, ladite couronne cannelée s'engageant avec des cannelures prévue sur la surface périphérique externe de ladite butée.

10. Robinet selon la revendication 9, **caractérisé en ce que** ledit volant est solidaire de ladite couronne cannelée par l'intermédiaire de vis qui traversent le corps de robinet au niveau de fentes de guidages qui définissent la course dudit volant autour du corps de robinet.

11. Robinet selon la revendication 8, 9 ou 10, **caractérisé en ce que** ledit corps de robinet comprend une pièce formant connecteur accueillant ladite tête de commande ; et **en ce que** ledit volant entoure ladite pièce formant connecteur, ladite couronne cannelée étant placée, et les fentes de guidage prévues, dans la pièce formant connecteur.

12. Robinet selon la revendication 11, **caractérisé en ce que** la tête de commande est fixée de manière amovible à ladite pièce formant connecteur.

13. Robinet selon la revendication 11 ou 12, **caractérisé en ce que** ladite pièce formant connecteur est réalisée comme une pièce intégrale du corps de robinet, ou rapportée.

14. Robinet selon l'une quelconque des revendications précédentes, **caractérisé en ce que** la tête de commande est du type à actionnement manuel ou à distance.

15. Robinet selon l'une quelconque des revendications précédentes, **caractérisé en ce que** la tête de commande est du type pneumatique avec ressorts de précontrainte, et en ce la tête de commande comprend un mécanisme de verrouillage pour bloquer lesdits ressorts de précontrainte dans une position comprimée.

16. Robinet selon l'une quelconque des revendications précédentes, **caractérisé en ce que** ledit volant du système de verrouillage comprend une série d'ouvertures qui sont positionnées de sorte qu'en position active, ces ouvertures soient alignées avec des moyens de fixation de la tête de commande au corps de robinet, pour permettre l'accès à ces moyens de fixation et permettre le démontage de ladite tête de commande, et de sorte à cacher ces moyens de fixation dans la position de repos.

17. Robinet selon l'une quelconque des revendications précédentes, **caractérisé en ce que** le corps de robinet est du type à siège direct, inversé ou à membrane.

18. Utilisation du robinet selon l'une quelconque des revendications précédentes comme robinet de bouteille ou comme vanne de passage dans une canalisation de distribution de gaz.
